# EUROPEAN PATENT APPLICATION

(11) **EP 4 742 832 A1**
(43) Date of publication of application: **13.05.2026**
(21) Application number: 24851072.9
(22) Date of filing: 08.08.2024
(51) Int. Cl.: H05B 3/86, B32B 3/08, B32B 17/06, B32B 7/12, B32B 33/00

(54) **LAMINATED GLASS, DISPLAY AND VEHICLE**

(30) Priority: 08.08.2023 CN 202310992926
(71) Applicant: Fuyao Glass Industry Group Co., Ltd., Fuqing, Fujian 350300 (CN)
(72) Inventor: CHEN, Bingjing, Fuqing, Fujian 350300 (CN); LIN, Jie, Fuqing, Fujian 350300 (CN); LI, Weijun, Fuqing, Fujian 350300 (CN)
(74) Representative: Mewburn Ellis LLP
(86) International application number: PCT/CN2024/110536
(87) International publication number: WO 2025/031427

(57) **Abstract**

A laminated glass, a display system, and a vehicle are provided in the present disclosure. The laminated glass includes an outer glass, an inner glass, an adhesive layer, a light-shielding layer, and a heating element. The outer glass and the inner glass are stacked. The outer glass has a first surface away from the inner glass and a second surface closer to the inner glass. The inner glass has a third surface closer to the outer glass and a fourth surface away from the outer glass. The adhesive layer is disposed between the outer glass and the inner glass, to bond the outer glass and the inner glass together. The light-shielding layer is disposed along an edge of the laminated glass, to form a light-transmitting region and a light-blocking region in the laminated glass. The light-blocking region has at least one first display region, and the at least one first display region is configured for reflecting a projection light ray emitted by a projection assembly to form a first primary image. The heating element is disposed between the outer glass and the inner glass, and the heating element is configured for generating heat when the heating element is energized. The laminated glass provided in the present disclosure allows the driver to sharply recognize projected information.

## Description

### CROSS-REFERENCE TO RELATED APPLICATION(S)

This application claims priority to Chinese Patent Application No. 202310992926.2, filed August 08, 2023 and entitled "LAMINATED GLASS, DISPLAY SYSTEM, AND VEHICLE", the entire disclosure of which is hereby incorporated by reference.

### TECHNICAL FIELD

This disclosure relates to the field of vehicle technology, in particular, to a laminated glass, a display system, and a vehicle.

### BACKGROUND

In recent years, head-up display (HUD) systems have been widely applied in vehicles to reduce the need for drivers to look down at instrument panels for obtaining information, thereby improving safety of driving. An HUD in a vehicle is composed of a front windshield and a projection assembly. When the projection assembly emits a projection light ray onto the front windshield, the drivers are able to see projected information. However, in the related art, during inclement weather such as rain or snow, the windshield is prone to being covered by ice, snow, or fog, which can prevent the driver from sharply recognizing the projected information from the HUD. Additionally, simply mounting a heating element on the windshield may cause multiple reflections of the projection light ray, leading to ghosting of an HUD projected image and further hindering the ability of the driver to sharply recognize the projected information from the HUD.

### SUMMARY

A laminated glass, a display system, and a vehicle that enable drivers to sharply recognize projected information are provided in the present disclosure.

In a first aspect, a laminated glass is provided in the present disclosure. The laminated glass includes an outer glass, an inner glass, an adhesive layer, a light-shielding layer, and a heating element. The outer glass and the inner glass are stacked. The outer glass has a first surface away from the inner glass and a second surface closer to the inner glass. The inner glass has a third surface closer to the outer glass and a fourth surface away from the outer glass. The adhesive layer is disposed between the outer glass and the inner glass, to bond the outer glass and the inner glass together. The light-shielding layer is disposed along an edge of the laminated glass, to form a light-transmitting region and a light-blocking region in the laminated glass. The light-blocking region has at least one first display region, and the at least one first display region is configured for reflecting a projection light ray emitted by a projection assembly to form a first primary image. The heating element is disposed between the outer glass and the inner glass, and the heating element is configured for generating heat when the heating element is energized.

The light-shielding layer includes a first light-shielding layer. The first light-shielding layer is disposed on the second surface. The heating element is disposed between the adhesive layer and the second surface or between the adhesive layer and the third surface.

The laminated glass further includes an enhanced reflection coating. The enhanced reflection coating is disposed on the fourth surface. The enhanced reflection coating at least partially covers the at least one first display region. The enhanced reflection coating is configured to increase a reflectivity of the at least one first display region for P-polarized light.

The light-transmitting region has at least one second display region, and the at least one second display region is configured for reflecting the projection light ray emitted by the projection assembly to form a second primary image.

The laminated glass further includes an enhanced reflection coating. The enhanced reflection coating at least partially covers the at least one second display region. The enhanced reflection coating is configured to increase a reflectivity of the at least one second display region for P-polarized light.

The light-shielding layer includes a second light-shielding layer. The second light-shielding layer is disposed on the third surface or the fourth surface. The second light-shielding layer at least covers the at least one first display region. The heating element is disposed between the second light-shielding layer and the second surface.

The light-transmitting region has at least one second display region, and the at least one second display region is configured for reflecting the projection light ray emitted by the projection assembly to form a second primary image. The laminated glass further includes an enhanced reflection coating. The enhanced reflection coating is disposed on the fourth surface. The enhanced reflection coating at least partially covers the at least one second display region. The enhanced reflection coating is configured to increase a reflectivity of the at least one second display region for P-polarized light.

A reflectivity of the at least one first display region for the P-polarized light is greater than or equal to 10%; and/or the light-transmitting region has at least one second display region, and a reflectivity of the at least one second display region for the P-polarized light is greater than or equal to 10%.

The heating element is a transparent conducting coating. The transparent conducting coating includes at least one of a metal layer, a metal-alloy layer, and a metal-oxide layer. A material of the metal layer includes one or more selected from the group consisting of gold (Au), silver (Ag), copper (Cu), aluminum (Al), and molybdenum (Mo). A material of the metal alloy layer includes a metal alloy composed of silver and one or more selected from the group consisting of copper (Cu), gold (Au), palladium (Pd), tin (Sn), zinc (Zn), lead (Pb), and nickel (Ni). A material of the metal oxide layer includes one or more selected from the group consisting of indium tin oxide, fluorine-doped tin oxide, aluminum-doped tin oxide, gallium-doped tin oxide, boron-doped tin oxide, tin zinc oxide, and antimony-doped tin oxide.

The heating element is an electric heating wire. The electric heating wire is an enameled wire, where an inner layer of the enameled wire is made of a conductive material, and an outer layer of the enameled wire is made of an insulating material. Alternatively, the electric heating wire is a tungsten wire. Alternatively, the electric heating wire is a copper wire.

The laminated glass further includes a first bus-bar and a second bus-bar that are disposed between the outer glass and the inner glass. The first bus-bar and the second bus-bar are disposed in the light-blocking region. The first bus-bar and the second bus-bar are spaced apart from each other and are electrically connected to the heating element. The heating element is configured for generating heat when the first bus-bar and the second bus-bar are energized.

The adhesive layer is a thermoplastic polymer film with a wedge angle ranging from 0.1 mrad to 1.0 mrad.

In a second aspect, a head-up display (HUD) system is further provided in the present disclosure. The HUD system includes a projection assembly and the laminated glass in the first aspect. The projection assembly is configured to emit the projection light ray onto the laminated glass.

The projection light ray includes P-polarized light and/or S-polarized light.

The projection assembly includes a first projection assembly and a second projection assembly. The light-blocking region of the laminated glass has the at least one first display region. The light-transmitting region of the laminated glass has at least one second display region. The first projection assembly is configured to project a light ray onto the at least one first display region to form the first primary image. The second projection assembly is configured to project a light ray onto the at least one second display region to form a second primary image.

The projection light ray emitted by the projection assembly onto the laminated glass has an incident angle ranging from 40° to 80°.

The projection light ray emitted by the projection assembly onto the laminated glass has a horizontal field of view (HFOV) ranging from 0° to 50° in a horizontal direction.

A color difference δE*between an image formed by the projection light ray emitted by the projection assembly onto the laminated glass and the laminated glass satisfies δE*= ((δL*/2)² + (δa*)² + (δb*)²)^{0.5}, where δL* is a lightness difference between a color of the image formed by the projection light ray onto the laminated glass and a color of the laminated glass, δa*is a green-red chroma difference between the color of the image formed by the projection light ray onto the laminated glass and the color of the laminated glass, and δb*is a blue-yellow chroma difference between the color of the image formed by the projection light ray onto the laminated glass and the color of the laminated glass.

A color difference δE*between the projection light ray emitted by the projection assembly and the light-blocking region of the laminated glass satisfies δE*≥ 19.9.

In a third aspect, a vehicle is further provided in the present disclosure. The vehicle includes a vehicle frame and the HUD system in the second aspect. The HUD system is carried on the vehicle frame.

In the laminated glass provided in the present disclosure, the heating element is provided, such that when the laminated glass is covered with frost, snow, or fog, the heating element can be energized to generate heat, thereby achieving the functions of defrosting, snow removal, and defogging, allowing the driver to sharply see the first primary image. Moreover, since the heating element is disposed between the outer glass and the inner glass, heat can rapidly transfer to both the outer glass and the inner glass, such that fog from an inside of the vehicle or frost/snow covering an outside of the vehicle can be rapidly removed. Further, when the projected light ray is emitted onto the first display region, since the first light-shielding layer serves as a background that does not allow a light ray to pass through, there is a relatively high contrast between the first primary image and the first light-shielding layer, enabling the driver to more sharply distinguish projected information contained in the first primary image.

### BRIEF DESCRIPTION OF THE DRAWINGS

In order to describe technical solutions of embodiments of the present disclosure more clearly, the following will give a brief introduction to accompanying drawings used for describing the embodiments. Apparently, the accompanying drawings hereinafter described are some embodiments of the present disclosure. Based on these drawings, those of ordinary skill in the art can also obtain other drawings without creative effort.
FIG. 1 is a schematic diagram of a vehicle provided in embodiments of the present disclosure.
FIG. 2 is a schematic simplified diagram of a head-up display (HUD) system provided in embodiments of the present disclosure.
FIG. 3 is a schematic diagram of an HUD system provided in an embodiment of the present disclosure.
FIG. 4 is a schematic diagram of an HUD system provided in another embodiment of the present disclosure.
FIG. 5 is a partial schematic diagram of a laminated glass in the HUD system as illustrated in FIG. 4.
FIG. 6 is a front view of a laminated glass provided in an embodiment of the present disclosure.
FIG. 7 is a front view of a laminated glass provided in another embodiment of the present disclosure.
FIG. 8 is a front view of a laminated glass provided in yet another embodiment of the present disclosure.
FIG. 9 is a schematic diagram of an HUD system provided in yet another embodiment of the present disclosure.
FIG. 10 is a partial schematic diagram of a laminated glass in the HUD system as illustrated in FIG. 9.

### DETAILED DESCRIPTION

The following will clearly and completely illustrate technical solutions of embodiments of the present disclosure with reference to accompanying drawings of embodiments of the present disclosure. Apparently, embodiments described herein are merely some embodiments, rather than all embodiments, of the present disclosure. Based on embodiments of the present disclosure, all other embodiments obtained by those of ordinary skill in the art without creative effort shall fall within the protection scope of the present disclosure.

Reference to "embodiment" or "implementation" herein means that a particular feature, structure, or characteristic described in conjunction with embodiments or implementations may be included in at least one embodiment of the present disclosure. The presence of the term at each place in the specification does not necessarily refer to the same embodiment, nor does it refer to a separate or alternative embodiment that is mutually exclusive of other embodiments. It may be understood by those skilled in the art, both explicitly and implicitly, that the embodiments described herein may be combined with other embodiments.

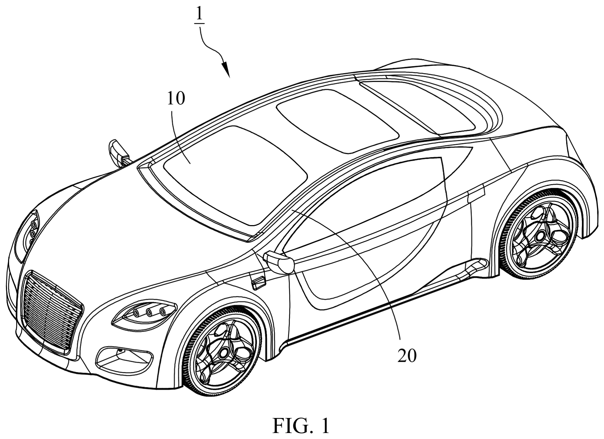

Referring to FIG. 1, a vehicle 1 is provided in the present disclosure, and the vehicle 1 may be, but is not limited to, a car, a multi-purpose automobile (MPV), a sport/suburban utility vehicle (SUV), an off-road automobile (ORV), a pick-and-place automobile, a minivan, a passenger car, a cargo truck, etc.

The vehicle 1 includes a vehicle frame 20 and a head-up display (HUD) system 10, where the HUD system 10 is directly or indirectly carried on the vehicle frame 20. The vehicle frame 20 refers to a framework that is used to support and connect each of various assemblies of the vehicle 1, to keep each of the various assemblies in a correct position, and to bear various loads inside and outside the vehicle 1. The HUD system 10 may also be referred to as a head-up viewing display system.

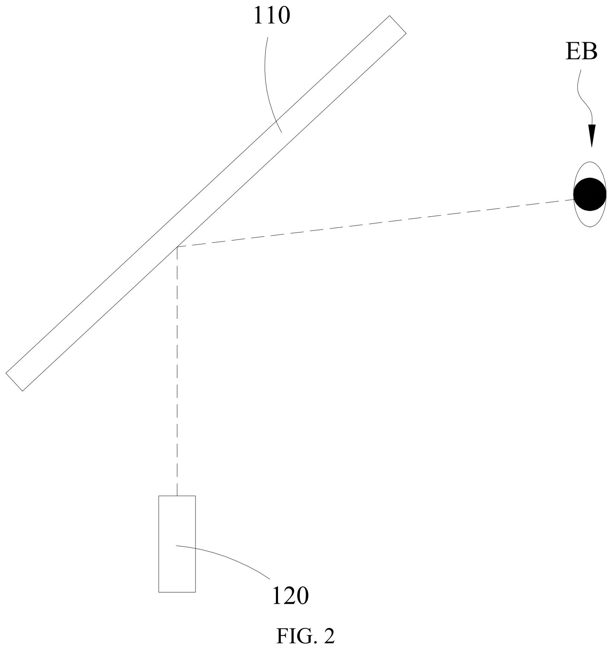

Referring to FIG. 2, an HUD system 10 is further provided in the present disclosure. The HUD system 10 includes a projection assembly 120 and a laminated glass 110. The projection assembly 120 may also be referred to as a picture generation unit (PGU). The PGU is configured to output an image. The number of projection assemblies 120 may be one, two, or more than two. The laminated glass 110 can be used for a front windshield of an automobile, where a visible light transmittance of a light-transmitting region 200 is greater than or equal to 70. The projection assembly 120 is configured to reflect an instrument signal, such as a vehicle speed, navigation, and other information, onto the laminated glass 110 via an aspherical mirror, and then the instrument signal is reflected by the laminated glass 110 and then enters an eye-box (EB). In other words, the projection assembly 120 is configured to emit a light ray representing a vehicle speed, navigation, and other information onto the laminated glass 110, i.e., the projection assembly 120 is configured to provide a projection light ray. The laminated glass 110 is configured to reflect the projection light ray into the EB, enabling a driver to see projected information, such as a vehicle speed, navigation, etc.

The projection light ray includes P-polarized light and/or S-polarized light. In other words, the projection light ray may be P-polarized light, S-polarized light, or both P-polarized light and S-polarized light.

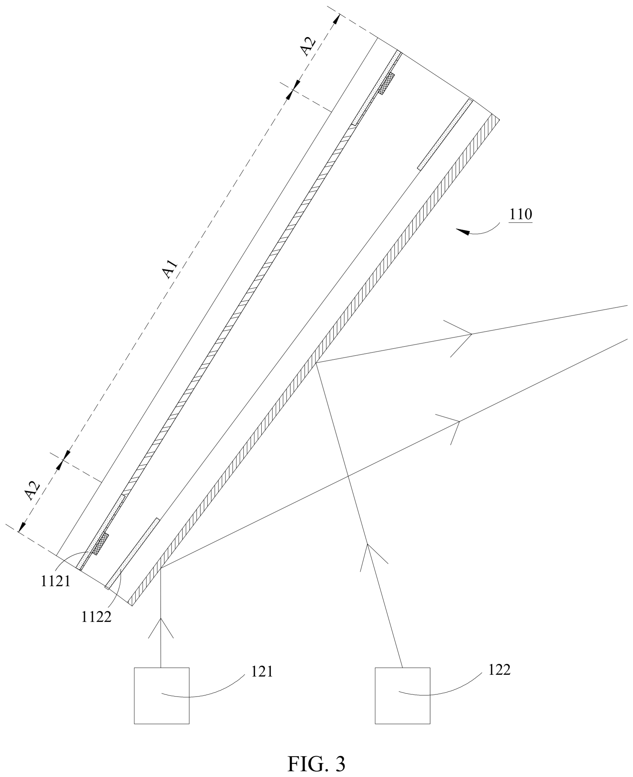

Referring to FIG. 2 and FIG. 3, the projection assembly 120 includes a first projection assembly 121 and a second projection assembly 122. A light-blocking region A2 of the laminated glass 110 has at least one first display region. A light-transmitting region A1 of the laminated glass 110 has at least one second display region. The first projection assembly 121 is configured to project a light ray onto the at least one first display region to form a first primary image. The second projection assembly 122 is configured to project a light ray onto the at least one second display region to form a second primary image.

Specifically, a path of the projection light ray emitted by the first projection assembly 121 is different from a path of the projection light ray emitted by the second projection assembly 122, and thus a position of the first primary image and a position of the second primary image seen by the human eye are different. It may be noted that, the first projection assembly 121 and the second projection assembly 122 may be connected as one integrated unit, or may be separated from each other as independent units. During operation, only the first projection assembly 121 may emit the projection light ray, in which case the human eye can only see the first primary image. Alternatively, only the second projection assembly 122 may emit the projection light ray, in which case the human eye can only see the second primary image. Alternatively, both the first projection assembly 121 and the second projection assembly 122 may emit the projection light ray, in which case the human eye can see both the first primary image and the second primary image. Displayed content of the first primary image and displayed content of the second primary image may be the same or different.

The number of first display regions may be one, two, three, five, etc. When there are multiple first display regions, the multiple first display regions may be spaced apart from one another, or may be at least partially connected to one another. Similarly, the number of second display regions may be one, two, three, five, etc. When there are multiple second display regions, the multiple second display regions may be spaced apart from one another, or may be at least partially connected to one another.

Optionally, the projection light ray emitted by the projection assembly 120 onto the laminated glass 110 has an incident angle ranging from 40° to 80°, for example, 40°, 45°, 50°, 61°, 75°, 80°, etc. In some further embodiments, the projection light ray emitted by the projection assembly 120 onto the laminated glass 110 has an incident angle ranging from 45° to 75°. In some even further embodiments, the projection light ray emitted by the projection assembly 120 onto the laminated glass 110 has an incident angle ranging from 50° to 60°. In some ideal embodiments, an incident angle of the projection light ray emitted by the projection assembly 120 onto the laminated glass 110 is a Brewster's angle.

Optionally, the projection light ray emitted by the projection assembly 120 onto the laminated glass 110 has a horizontal field of view (HFOV) ranging from 0° to 50° in a horizontal direction, for example, 10°, 20°, 31°, 42°, 50°, etc. The angle preferably ranges from 0° to 35°, and a smaller angle value leads to a better projection imaging effect.

Optionally, a color difference δE*between an image formed by the projection light ray emitted by the projection assembly 120 onto the laminated glass 110 and the laminated glass 110 satisfies δE*= ((δL*/2)² + (δa*)² + (δb*)²)^{0.5}, where δL*is a lightness difference between a color of the image formed by the projection light ray onto the laminated glass 110 and a color of the laminated glass 110, δa* is a green-red chroma difference between the color of the image formed by the projection light ray onto the laminated glass 110 and the color of the laminated glass 110, and δb*is a blue-yellow chroma difference between the color of the image formed by the projection light ray onto the laminated glass 110 and the color of the laminated glass 110.

Optionally, a color difference δE*between the image formed by the projection light ray emitted by the projection assembly 120 onto the laminated glass 110 and the light-blocking region A2 of the laminated glass 110 satisfies δE*≥ 19.9. For example, δE*may be 19.9, 20, 21, 25, 30, 35, 41, 46, etc. Further, a color difference δE*between the projection light ray emitted by the projection assembly 120 and the light-blocking region A2 of the laminated glass 110 satisfies δE*≥ 19.9.

Specifically, in commission on illumination (CIE) LAB color space, human color perception is defined and quantified by lightness and chroma. In a CIE 1976 system, L*represents lightness, and a*(green-red) and b*(blue-yellow) represent chroma. A color difference between two colors can be represented by δE*, and δE*can be expressed by a formula: δE*= ((δL*/2)² + (δa*)² + (δb*)²)^{0.5}, where δL*is a lightness difference between the two colors, δa*is a green-red chroma difference between the two colors, and δb*is a blue-yellow chroma difference between the two colors. A smaller value of δE*indicates that the two colors are more similar and less perceptually distinguishable. Conversely, a greater value of δE*indicates that the two colors are more different and easier to distinguish. Taking the first display region as an example, if the light-blocking region A2 is black, when a projected color of the projection light ray emitted by the projection assembly 120 is white, δE*= 47.5; when the projected color of the projection light ray emitted by the projection assembly 120 is red, δE*= 106; and when the projected color of the projection light ray emitted by the projection assembly 120 is gray, δE*= 19.9. It can be understood that, a greater value of δE*leads to a higher sharpness of the first primary image that the human eye can recognize. It may be noted that, in the above formula, the color difference δE*is calculated using half of the lightness difference (i.e., δL*/2) rather than δL*in the calculation, thereby reducing a weight of the lightness difference on the color difference.

In the related art, when an outer surface of the laminated glass is covered with ice or snow, vision of the driver is affected, and an HUD projected image cannot be sharply recognized by the driver. When an inner surface of the laminated glass is prone to fogging during rainy weather, a projected image displayed in a black bottom region is covered by fog, and the driver cannot sharply recognize the projected image. Under a condition of high ambient humidity and a significant temperature difference between the inside and the outside of the vehicle, a bottom region of the laminated glass is prone to fogging, making a projected image in the bottom region difficult to recognize.

Based on this, the present disclosure is aimed at providing a solution that can solve, but is not limited to, the technical problems mentioned above, details of which will be described in the following embodiments.

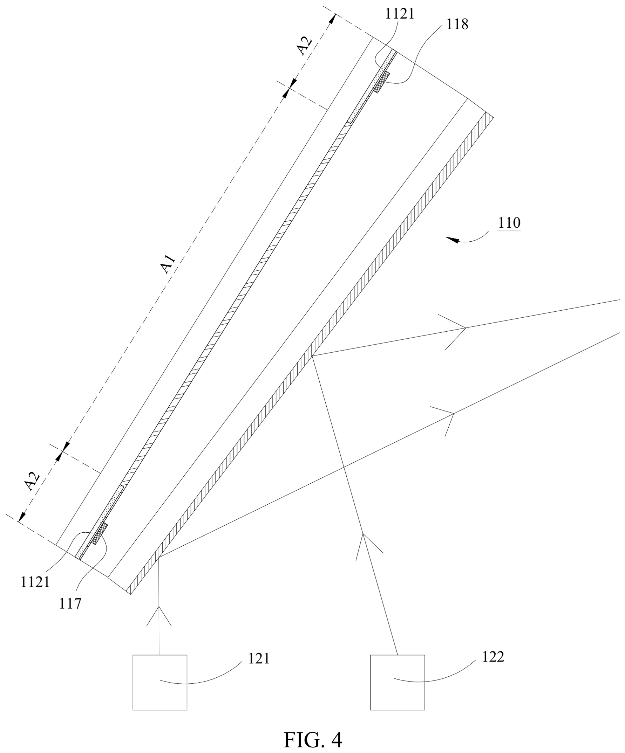

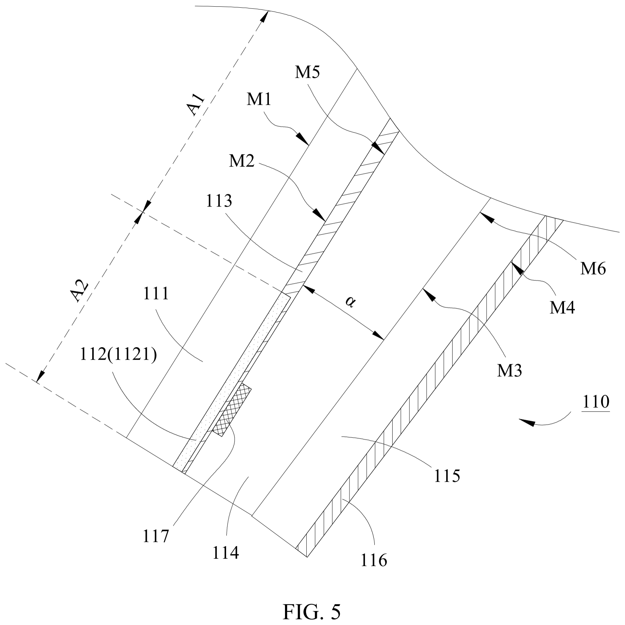

Referring to FIG. 4 and FIG. 5, a laminated glass 110 is further provided in the present disclosure. The laminated glass 110 is configured to form a primary image according to a projection light ray emitted by a projection assembly 120. The laminated glass 110 includes an outer glass 111, an inner glass 115, an adhesive layer 114, a light-shielding layer 112, and a heating element 113. The outer glass 111 and the inner glass 115 are stacked. The outer glass 111 has a first surface M1 away from the inner glass 115 and a second surface M2 closer to the inner glass 115. The inner glass 115 has a third surface M3 closer to the outer glass 111 and a fourth surface M4 away from the outer glass 111. The adhesive layer 114 is disposed between the outer glass 111 and the inner glass 115, to bond the outer glass 111 and the inner glass 115 together. The light-shielding layer 112 is disposed along an edge of the laminated glass 110, to form a light-transmitting region A1 and a light-blocking region A2 in the laminated glass 110. The light-blocking region A2 has at least one first display region, and the at least one first display region is configured for reflecting a projection light ray emitted by the projection assembly 120 to form a first primary image. The heating element 113 is disposed between the outer glass 111 and the inner glass 115, and the heating element 113 is configured for generating heat when the heating element 113 is energized.

Specifically, the laminated glass 110 is of a stacked structure composed of the outer glass 111, the adhesive layer 114, the light-shielding layer 112, the heating element 113, and the inner glass 115. The stacked structure can realize functions such as light transmission, heating, projection, etc.

The outer glass 111 has the first surface M1 and the second surface M2 opposite to each other. The inner glass 115 has the third surface M3 and the fourth surface M4 opposite to each other. The third surface M3 and the second surface M2 are disposed facing towards each other. The heating element 113 is disposed between the second surface M2 and the third surface M3. The laminated glass 110 has a first side and a second side opposite to each other. The first side is a side where the first surface M1 is located, and the second side is a side where the fourth surface M4 is located. The first surface M1 is disposed facing towards the outside of the vehicle, and the fourth surface M4 is disposed facing towards the inside of the vehicle. Therefore, from the perspective of the vehicle 1, the first side can be understood as an outer side of the laminated glass 110, and the second side can be understood as an inner side of the laminated glass 110. The projection assembly 120 is mounted inside the vehicle 1 and is configured to emit the projection light ray from the second side onto the laminated glass 110.

The light-shielding layer 112 is made of a material that does not allow a light ray to pass through. The light-shielding layer 112 is disposed at the edge of the laminated glass 110, i.e., the light-shielding layer 112 is substantially in a square annular shape. In addition, the light-shielding layer 112 may partially extend towards the center of the laminated glass 110 at certain positions to shield corresponding regions, or the light-shielding layer 112 may be discontinuous at certain positions. The light-shielding layer 112 forms the light-blocking region A2 on the laminated glass 110, and the remaining region without the light-shielding layer 112 on the laminated glass 110 is the light-transmitting region A1. The light-blocking region A2 does not allow a light ray to pass through, and the light-transmitting region A1 allows a light ray to pass through. The heating element 113 is made of a conductive material and is configured to generate heat when the heating element 113 is energized. The light-blocking region A2 has the at least one first display region, and the at least one first display region is configured for reflecting the projection light ray emitted by the projection assembly 120 to form the first primary image. Since the first display region is positioned in the light-blocking region A2, a first light-shielding layer 1121 in the light-blocking region A2 can serve as a background and a substrate for the first primary image. As such, a distinct contrast can be formed between the first primary image and the first light-shielding layer 1121, which can make the first primary image more prominent, and thus the driver can more easily and sharply distinguish content of the first primary image.

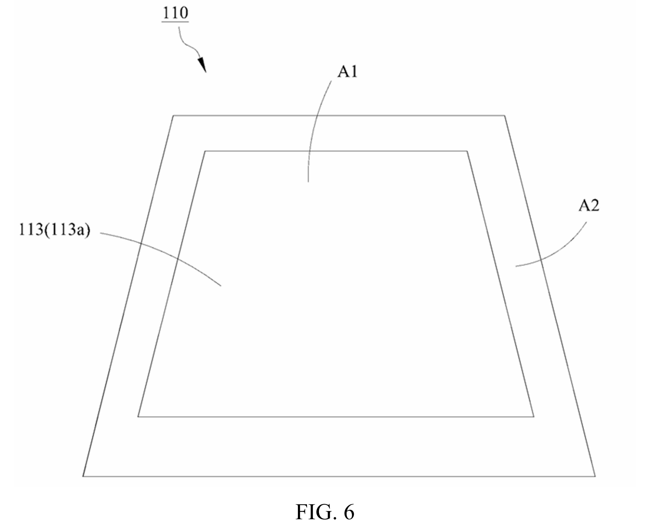

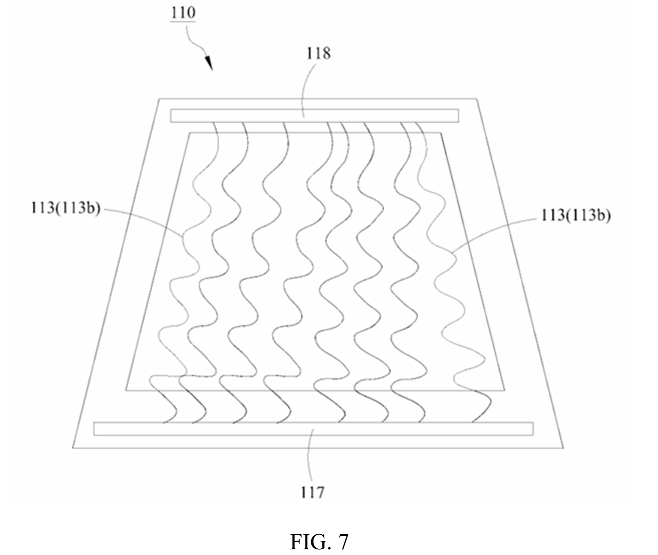

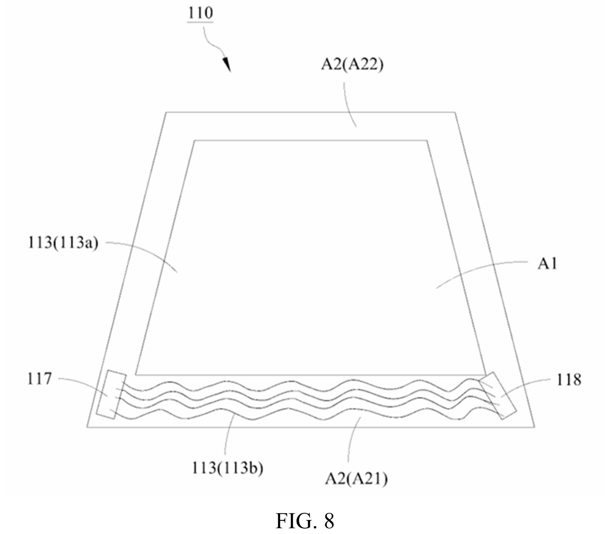

A type of the heating element 113 may be a transparent conducting coating 113a (as illustrated in FIG. 6), and the transparent conducting coating 113a is in a form of a thin coating. Alternatively, the heating element 113 may be an electric heating wire 113b (as illustrated in FIG. 7 and FIG. 8), and the electric heating wire 113b is in a form of a filament. The heating element 113 will be described in detail below, which will not be elaborated herein. Additionally, the heating element 113 may be disposed on the entire laminated glass 110, or may be disposed on a partial region of the laminated glass 110. The heating element 113 may not overlap with the first display region and/or the second display region. Preferably, the heating element 113 at least partially overlaps with the first display region and/or the second display region. Moreover, in some specific embodiments, as illustrated in FIG. 7, the heating element 113 is at least partially disposed in the entire light-blocking region. Alternatively, as illustrated in FIG. 8, the heating element 113 is only disposed in the light-blocking region.

In the laminated glass 110 provided in the present disclosure, the heating element 113 is provided, such that when the laminated glass 110 is covered with frost, snow, or fog, the heating element 113 can be energized to generate heat, thereby achieving the functions of defrosting, snow removal, and defogging, allowing the driver to sharply see the first primary image. Moreover, since the heating element 113 is disposed between the outer glass 111 and the inner glass 115, heat can rapidly transfer to both the outer glass 111 and the inner glass 115, such that fog from the inside of the vehicle or frost/snow covering the outside of the vehicle can be rapidly removed. For the heating element 113, heating for 20 minutes is preferred, achieving a defrosting degree of 80% or higher; heating for 12 minutes is more preferred, achieving a defrosting degree of 80% or higher; and heating for 5 minutes is the most preferred, achieving a defrosting degree of 80% or higher. Further, when the projection light ray is emitted onto the first display region, since the first light-shielding layer 1121 serves as a background that does not allow a light ray to pass through, there is a relatively high contrast between the first primary image and the first light-shielding layer 1121, enabling the driver to more sharply distinguish the first primary image.

Optionally, referring to FIG. 4 and FIG. 5, the light-shielding layer 112 includes the first light-shielding layer 1121. The first light-shielding layer 1121 is disposed on the second surface M2. The heating element 113 is disposed between the adhesive layer 114 and the second surface M2 or between the adhesive layer 114 and the third surface M3. That is, the heating element 113 may be disposed between the outer glass 111 and the adhesive layer 114, or may be disposed between the adhesive layer 114 and the inner glass 115. In this case, the heating element 113 may be implemented as the electric heating wire 113b. In this case, the projection light ray projected onto the first display region may be either P-polarized light or S-polarized light, with S-polarized light being preferred.

Optionally, referring to FIG. 4 and FIG. 5, the laminated glass 110 further includes an enhanced reflection coating 116. The enhanced reflection coating 116 is disposed on the fourth surface M4, and the enhanced reflection coating 116 at least partially covers the at least one first display region. The enhanced reflection coating 116 is configured to increase a reflectivity of the at least one first display region for P-polarized light. In this embodiment, the projection light ray emitted onto the first display region may be P-polarized light. Since the enhanced reflection coating 116 covering the first display region can enhance the reflection for the P-polarized light, the display sharpness of the first primary image can be improved. In this case, the heating element 113 may be implemented as the transparent conducting coating 113a.

Optionally, referring to FIG. 4 and FIG. 5, the light-transmitting region A1 has at least one second display region, and the at least one second display region is configured for reflecting the projection light ray emitted by the projection assembly 120 to form a second primary image. In this embodiment, since the second primary image is formed by reflection from the second display region, the second primary image and the first primary image do not interfere with each other. The second primary image and the first primary image may be projected and displayed simultaneously, allowing for the display of more projection content. Certainly, during the projection, only either the first primary image or the second primary image may be displayed.

Optionally, referring to FIG. 4 and FIG. 5, the laminated glass 110 further includes an enhanced reflection coating 116. The enhanced reflection coating 116 at least partially covers the at least one second display region. The enhanced reflection coating 116 is configured to increase a reflectivity of the at least one second display region for P-polarized light. In this embodiment, the projection light ray emitted onto the second display region may be P-polarized light. Since the enhanced reflection coating 116 covering the second display region can enhance the reflection for the P-polarized light, the display sharpness of the second primary image can be improved.

It may be noted that, when the projection light ray is emitted onto the laminated glass 110, whether the projection light ray is emitted onto the first display region or the second display region, at least portion of the light ray will enter the laminated glass 110. If the projection light ray is incident on the heating element 113 (the type of the heating element 113 is the transparent conducting coating 113a), the at least portion of the light ray will be reflected by the heating element 113 and then enter the human eye. As such, in addition to a primary image, the human eye may also see a virtual image that is formed by reflection of the heating element 113 and does not overlap with or does not completely overlap with the primary image. That is, the human eye may see ghosting, which will make the projected image seen by the driver unsharp.

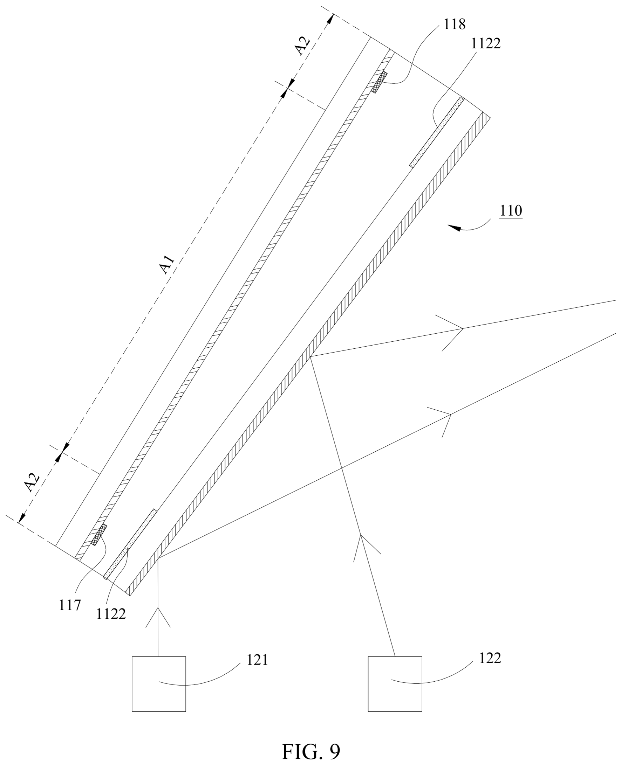

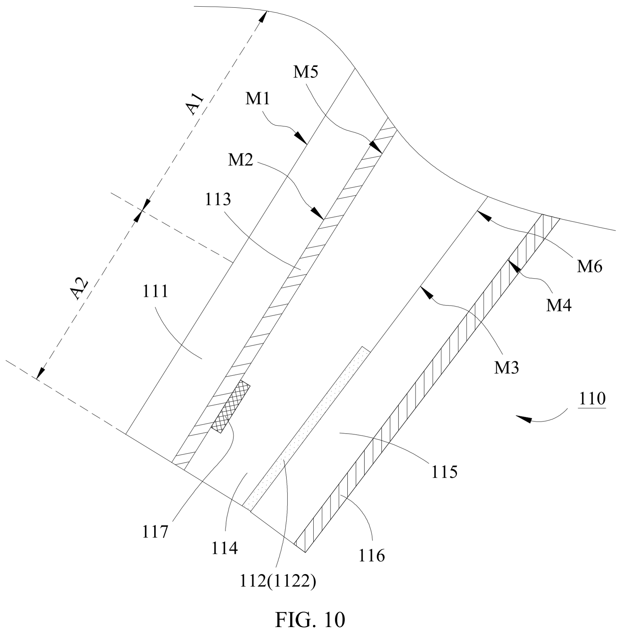

Optionally, referring to FIG. 9 and FIG. 10, the light-shielding layer 112 includes a second light-shielding layer 1122. The second light-shielding layer 1122 is disposed on the third surface M3 or the fourth surface M4. The second light-shielding layer 1122 at least covers the at least one first display region. The heating element 113 is disposed between the second light-shielding layer 1122 and the second surface M2, that is, the heating element 113 is disposed between the outer glass 111 and the second light-shielding layer 1122. In this embodiment, the heating element 113 is disposed between the outer glass 111 and the second light-shielding layer 1122, such that the projection light ray will be blocked by the second light-shielding layer 1122, and thus cannot be incident on the heating element 113. In this way, when the transparent conducting coating 113a is used as the heating element 113, ghosting in the first display region caused by the projection light ray reflected by the heating element 113 can be avoided, such that the driver can sharply see the first primary image. Alternatively, the heating element 113 may be disposed between the adhesive layer 114 and the second light-shielding layer 1122. Alternatively, when the second light-shielding layer 1122 is disposed on the fourth surface M4, the heating element 113 may be disposed on the third surface M3.

Optionally, the first light-shielding layer 1121 and the second light-shielding layer 1122 may coexist, or only either the first light-shielding layer 1121 or the second light-shielding layer 1122 may exist. Referring to FIG. 3, the first light-shielding layer 1121 is connected to the second surface M2, the second light-shielding layer 1122 is connected to the third surface M3, and the heating element 113 is disposed between the first light-shielding layer 1121 and the second light-shielding layer 1122.

Optionally, referring to FIG. 9 and FIG. 10, the light-transmitting region A1 has at least one second display region, and the at least one second display region is configured for reflecting the projection light ray emitted by the projection assembly 120 to form a second primary image. The laminated glass 110 further includes an enhanced reflection coating 116. The enhanced reflection coating 116 is disposed on the fourth surface M4, and the enhanced reflection coating 116 at least partially covers the at least one second display region. The enhanced reflection coating 116 is configured to increase a reflectivity of the at least one second display region for P-polarized light. In this embodiment, the projection light ray emitted onto the second display region may be P-polarized light. Since the enhanced reflection coating 116 covering the second display region can enhance the reflection for the P-polarized light, the display sharpness of the second primary image can be improved.

For the first display region, the projection light ray may be S-polarized light and/or P-polarized light. When the first display region is not provided with the enhanced reflection coating 116, S-polarized light may be used, and the first primary image is displayed more sharply. When the first display region is provided with the enhanced reflection coating 116, P-polarized light may be used, and the first primary image is displayed more sharply.

For the second display region, the projection light ray may be S-polarized light and/or P-polarized light. When the first display region is not provided with the enhanced reflection coating 116, S-polarized light may be used, and the first primary image is displayed more sharply. When the first display region is provided with the enhanced reflection coating 116, P-polarized light may be used, and the first primary image is displayed more sharply.

The following will introduce several feasible structural forms in conjunction with the type of the heating element 113.

In an embodiment, if the heating element 113 is a transparent conducting coating 113a, the transparent conducting coating 113a is disposed on the second surface M2, the light-shielding layer 112 is disposed on the second surface M2, and a projection is formed in the light-blocking region A2. In this case, if the projection light ray is P-polarized light, an enhanced reflection coating 116 needs to be disposed in the first display region to improve the display sharpness of the first primary image in the light-blocking region A2.

In another embodiment, if the heating element 113 is an electric heating wire, the electric heating wire can be disposed on the third surface M3, the light-shielding layer 112 can be disposed on the second surface M2, and a projection is formed in the light-blocking region A2. In this case, if the projection light ray is S-polarized light, there is no need to dispose an enhanced reflection coating 116 in the first display region, and a sharp first primary image can be seen in the first display region. If the projection light ray is P-polarized light, an enhanced reflection coating 116 needs to be disposed in the first display region to improve the display sharpness of the first primary image in the light-blocking region A2.

In yet another embodiment, the heating element 113 is a transparent conducting coating 113a. Since the transparent conducting coating 113a is also configured to reflect the projection light ray, causing ghosting in the projected image, the following combination is preferred: the transparent conducting coating 113a is disposed on the second surface M2, the second light-shielding layer 1122 is disposed on the third surface M3, and the enhanced reflection coating 116 is disposed on the fourth surface M4. Since the second light-shielding layer 1122 is disposed on the third surface M3, the projection light ray emitted on the first display region cannot pass through the second light-shielding layer 1122, and thus cannot be incident on the transparent conducting coating 113a, such that ghosting caused by the reflection of the transparent conducting coating 113a can be avoided, thereby making the first primary image sharper. In this case, the enhanced reflection coating 116 can improve the reflectivity for P-polarized light, and thus P-polarized light is preferably selected as the projection light ray for the first display region.

In still yet another embodiment, the heating element 113 is a transparent conducting coating 113a. The transparent conducting coating 113a is disposed on the second surface M2, the second light-shielding layer 1122 is disposed on the third surface M3 or the fourth surface M4, and the fourth surface M4 is not provided with an enhanced reflection coating 116. In this case, S-polarized light can be used as the projection light ray for the first display region.

Optionally, in the foregoing embodiments, when the enhanced reflection coating 116 is provided, if the enhanced reflection coating 116 covers the second display region, the reflectivity of the second display region for the P-polarized light is greater than or equal to 10%. Preferably, the reflectivity of the second display region for the P-polarized light is greater than or equal to 15%. More preferably, the reflectivity of the second display region for the P-polarized light is greater than or equal to 20%. Even more preferably, the reflectivity of the second display region for the P-polarized light is greater than or equal to 30%.

Optionally, in the foregoing embodiments, when the enhanced reflection coating 116 is provided, if the enhanced reflection coating 116 covers the first display region, the reflectivity of the first display region for the P-polarized light is greater than or equal to 10%. Preferably, the reflectivity of the first display region for the P-polarized light is greater than or equal to 15%. More preferably, the reflectivity of the first display region for the P-polarized light is greater than or equal to 20%. Even more preferably, the reflectivity of the first display region for the P-polarized light is greater than or equal to 30%.

Optionally, in the foregoing embodiments, when the enhanced reflection coating 116 is provided, if the same enhanced reflection coating 116 is configured to cover both the first display region and the second display region, the reflectivity of the first display region for the P-polarized light and the reflectivity of the second display region for the P-polarized light are the same.

The following describes several feasible implementations of the heating element 113 with reference to the accompanying drawings.

Referring to FIG. 6, in an embodiment, the heating element 113 is a transparent conducting coating 113a. The transparent conducting coating 113a includes a metal layer, which enables the transparent conducting coating 113a to have both heat insulation and heating functions. The transparent conducting coating may be directly deposited onto the second surface M2 or the third surface M3 through chemical vapor deposition (CVD) or physical vapor deposition (PVD), for example, a magnetron sputtering deposition. Preferably, the transparent conducting coating is capable of withstanding a high-temperature heat treatment, such as a heat treatment with a bending process like heat bending and tempering. The transparent conducting coating 113a includes at least one of a metal layer, a metal-alloy layer, and a metal-oxide layer. A material of the metal layer includes one or more selected from the group consisting of gold (Au), silver (Ag), copper (Cu), aluminum (Al), and molybdenum (Mo). A material of the metal alloy layer includes a metal alloy composed of silver and one or more selected from the group consisting of copper (Cu), gold (Au), palladium (Pd), tin (Sn), zinc (Zn), lead (Pb), and nickel (Ni). A material of the metal oxide layer includes one or more selected from the group consisting of indium tin oxide, fluorine-doped tin oxide, aluminum-doped tin oxide, gallium-doped tin oxide, boron-doped tin oxide, tin zinc oxide, and antimony-doped tin oxide. For example, when the transparent conducting coating includes a silver layer or a silver-alloy layer, the silver layer or silver-alloy layer is disposed between at least two dielectric layers, where a material of the at least two dielectric layers includes one or more selected from the group consisting of zinc oxide, tin oxide, indium oxide, titanium oxide, silicon oxide, aluminum oxide, silicon nitride, silicon carbide, aluminum nitride, and titanium metal.

Referring to FIG. 7 and FIG. 8, in another embodiment, the heating element 113 is an electric heating wire 113b, and the electric heating wire 113b may also be referred to as a conductive wire. The electric heating wire 113b may be an enameled wire, where an inner layer of the enameled wire is made of a conductive material, and an outer layer of the enameled wire is made of an insulating material. Alternatively, the electric heating wire 113b may be a tungsten wire, and the tungsten wire is a fine wire produced by forging and drawing a tungsten bar. Alternatively, the electric heating wire 113b may be a copper wire.

In an embodiment, the electric heating wire 113b may be an enameled wire, where an inner layer of the enameled wire may be made of a conductive material such as a copper wire, an aluminum wire, an alloy wire, etc., and an outer layer may be made of an insulating material such as polyurethane, polyimide, etc. The wire diameter of the enameled wire may range from 0.08 mm to 0.2 mm, for example, 0.08 mm, 0.09 mm, 0.1 mm, 0.11 mm, 0.12 mm, 0.13 mm, 0.14 mm, 0.15 mm, 0.16 mm, 0.17 mm, 0.18 mm, 0.19 mm, 0.2 mm, etc. The resistance of the enameled wire may range from 0.5 Ω/m to 3.7 Ω/m, for example, 0.5 Ω/m, 1.0 Ω/m, 1.5 Ω/m, 1.8 Ω/m, 2.1 Ω/m, 2.6 Ω/m, 3.0 Ω/m, 3.5 Ω/m, 3.7 Ω/m, etc. Preferably, the wire diameter ranges from 0.1 mm to 0.15 mm, and the resistance ranges from 0.9 Ω/m to 2.33 Ω/m.

In another embodiment, the electric heating wire 113b may be a tungsten wire, and the tungsten wire is a fine wire produced by forging and drawing a tungsten bar. The wire diameter of the tungsten wire ranges from 0.02 mm to 0.048 mm. The resistance of the tungsten wire ranges from 33 Ω/m to 194 Ω/m. Preferably, the wire diameter is 0.048 mm, and the resistance is 33 Ω/m.

In yet another embodiment, the heating wire 113b may be a copper wire, where the wire diameter of the copper wire ranges from 0.01 mm to 0.015 mm. The resistance of the copper wire is 0.017 Ω/m. The copper wire can increase the heating power density and shorten the heating time.

Referring to FIG. 8, in yet another embodiment, the heating element 113 is composed of a transparent conducting coating 113a with a conductive function and an electric heating wire 113b with a conductive function. That is, the heating element 113 includes both the transparent conducting coating 113a and the electric heating wire 113b. It may be noted that, during heating, only the transparent conducting coating 113a may be heated, only the electric heating wire 113b may be heated, or both the transparent conducting coating 113a and the electric heating wire 113b may be heated. For descriptions of the transparent conducting coating 113a and the electric heating wire 113b, reference may be made to those in the foregoing embodiments.

Referring to FIG. 8 again, optionally, the transparent conducting coating 113a is at least partially disposed in the light-transmitting region A1, and the electric heating wire 113b is disposed in the light-blocking region A2. In this way, the electric heating wire 113b can be hidden in the light-blocking region A2, and thus the electric heating wire 113b will not affect the aesthetics of the laminated glass 110.

Referring to FIG. 8 again, optionally, the light-blocking region A2 has a first segment A21 and a second segment A22 that are spaced apart from each other. The first segment A21 is positioned at a bottom end of the laminated glass 110, where the bottom end refers to an end of the laminated glass 110 closer to a chassis of the vehicle 1 (or an end of the laminated glass 110 closer to the ground). The second segment A22 is positioned at a top end of the laminated glass 110, where the top end refers to an end of the laminated glass 110 away from the chassis of the vehicle 1 (or an end of the laminated glass 110 away from the ground). The transparent conducting coating 113a is at least partially disposed in the light-transmitting region A1, and the electric heating wire 113b is disposed in the first segment A21 of the light-blocking region A2. Since the first primary image seen by the driver is positioned in the first segment A21 when the projection assembly 120 emits the projection light ray onto the first display region, if the first segment A21 is covered with fog, frost, or snow, the fog, frost, or snow can be quickly and specifically removed through heating of the electric heating wire 113b.

Referring to FIG. 4, FIG. 7, and FIG. 8, the laminated glass 110 further includes a first bus-bar 117 and a second bus-bar 118 that are disposed between the outer glass 111 and the inner glass 115. The first bus-bar 117 and the second bus-bar 118 are disposed in the light-blocking region A2. The first bus-bar 117 and the second bus-bar 118 are spaced apart from each other and are electrically connected to the heating element 113. The heating element 113 is configured for generating heat when the first bus-bar 117 and the second bus-bar 118 are energized.

Specifically, a heating current from a power supply can flow through the heating element 113 via the first bus-bar 117 and the second bus-bar 118. The heating element 113 generates heat under the action of the heating current, thereby enabling the laminated glass 110 to have functions such as defrosting, defogging, and de-icing. A minimum distance from the first bus-bar 117 or the second bus-bar 118 to an edge of a light-transmitting layer 100 can range from 6 mm to 30 mm, for example, 6 mm, 10 mm, 13 mm, 15 mm, 18 mm, 20 mm, 25 mm, 26 mm, 29 mm, 30 mm, etc. A material of the first bus-bar 117 and a material of the second bus-bar 118 may be a metal foil, conductive silver paste, etc.

Referring to FIG. 4 and FIG. 7 again, the first bus-bar 117 and the second bus-bar 118 are disposed in the light-blocking region A2. Since the light-blocking region A2 does not allow a light ray to pass through, the first bus-bar 117 and the second bus-bar 118 are disposed in the light-blocking region A2, such that the first bus-bar 117 and the second bus-bar 118 can be hidden, thereby improving the aesthetics of the laminated glass 110. Moreover, in this way, the first bus-bar 117 and the second bus-bar 118 will not affect the observation of the projected image by the driver.

Referring to FIG. 5, the adhesive layer 114 is a thermoplastic polymer film with a wedge angle ranging from 0.1 mrad to 1.0 mrad. The size of the wedge angle may be, but is not limited to, 0.1 mrad, 0.2 mrad, 0.3 mrad, 0.4 mrad, 0.5 mrad, 0.6 mrad, 0.7 mrad, 0.8 mrad, 0.9 mrad, 1.0 mrad, etc.

Specifically, when the projection light ray is emitted onto the second display region, for one thing, since the heating element 113 is disposed between the outer glass 111 and the inner glass 115, a small portion of the projection light ray will enter the laminated glass 110 and then is incident on the heating element 113. If the heating element 113 is the transparent conducting coating 113a, the transparent conducting coating 113a will reflect the portion of the projection light ray to form a first secondary image. The first secondary image does not overlap with or at least partially overlaps with the second primary image, resulting in ghosting. For another thing, since an angle of a light source emitted by the projection assembly 120 is deviated, a very small portion of the light source will be incident on the first surface M1 and then be reflected back to the EB, to form a second secondary image. The second secondary image does not overlap with or at least partially overlaps with the second primary image, resulting in ghosting. Both the first secondary image and the second secondary image will affect the viewing of the second primary image by the driver, that is, the driver will see a blurred projected image.

In this embodiment, the heating element 113 is disposed between the outer glass 111 and the adhesive layer 114. As such, the first secondary image and the second secondary image can be corrected by the wedge-shaped adhesive layer 114, such that the first secondary image and the second secondary image are brought closer to the second primary image. If the first secondary image and the second secondary image are closer to the second primary image, the driver can see the second primary image more sharply.

Specifically, after the projection assembly 120 emits the projection light ray, three virtual images visible in the EB, i.e., the second primary image, the first secondary image, and the second secondary image, will be generated. The second primary image, the first secondary image, and the second secondary image are formed by a first light ray, a second light ray, and a third light ray of the projection light ray, respectively. The first secondary image may also be referred to as a first ghost image, and the second secondary image may also be referred to as a second ghost image.

With regard to the second primary image, after reaching the enhanced reflection coating 116, the first light ray is reflected by a surface of the enhanced reflection coating 116 away from the inner glass 115 (hereinafter referred to as an exposed surface of the enhanced reflection coating 116), thereby changing its propagation direction and propagating towards the EB. The first light ray reflected by the enhanced reflection coating 116 is further defined as a first eye-entering light ray. The first eye-entering light ray finally enters the EB, and the second primary image is formed on a line extending opposite to a propagation direction of the first eye-entering light ray.

With regard to the first secondary image, after entering the laminated glass 110 and passing through the enhanced reflection coating 116, the inner glass 115, and the adhesive layer 114 in sequence, the second light ray is incident on the heating element 113. Since the heating element 113 includes a metal layer, the heating element 113 can reflect a visible light spectrum, and thus the heating element 113 can reflect the light ray. Being reflected by the heating element 113, the second light ray changes its propagation direction and propagates towards a position of the enhanced reflection coating 116, and finally exits from the exposed surface of the enhanced reflection coating 116. The second light ray exiting from the exposed surface of the enhanced reflection coating 116 is further defined as a second eye-entering light ray. The second eye-entering light ray finally enters the EB, and the first secondary image is formed on a line extending opposite to a propagation direction of the second eye-entering light ray.

With regard to the second secondary image, after entering the laminated glass 110 and passing through the enhanced reflection coating 116, the inner glass 115, the adhesive layer 114, and the heating element 113 in sequence, the third light ray is incident on the outer glass 111. Then, being reflected by the first surface M1, the third light ray changes its propagation direction and propagates towards the position of the enhanced reflection coating 116, and finally exits from the exposed surface of the enhanced reflection coating 116. The third light ray exiting from the exposed surface of the enhanced reflection coating 116 is further defined as a third eye-entering light ray. The third eye-entering light ray finally enters the EB, and the second secondary image is formed on a line extending opposite to a propagation direction of the third eye-entering light ray.

Further, the adhesive layer 114 has a fifth surface M5 and a sixth surface M6 opposite to each other. The fifth surface M5 is disposed facing towards the second surface M2, and the sixth surface M6 is disposed facing towards the third surface M3. The fifth surface M5 and the sixth surface M6 are inclined relative to each other, making the adhesive layer 114 be wedge-shaped. The "inclined relative to each other" means that the fifth surface M5 and the sixth surface M6 are not parallel to each other, and thus the adhesive layer 114 are wedge-shaped. Optionally, a wedge angle α defined between the fifth surface M5 and the sixth surface M6 (as illustrated in FIG. 5) may range from 0.1 mrad to 1.0 mrad, preferably from 0.2 mrad to 0.7 mrad, and more preferably from 0.25 mrad to 0.55 mrad.3333

It can be understood that, if an angle at which the fifth surface M5 and the sixth surface M6 are inclined relative to each other is changed, a propagation path of a light ray passing through the adhesive layer 114 will also be changed. The second primary image is formed by direct reflection of the first light ray by the exposed surface of the enhanced reflection coating 116, and thus a position of the second primary image will not be affected by the wedge-shaped adhesive layer 114. The first secondary image is formed by reflection of the second light ray by a functional coating layer, and the functional coating layer is disposed between the outer glass 111 and the adhesive layer 114. As such, in a process of being incident on the exposed surface of the enhanced reflection coating 116 and exiting from the exposed surface of the enhanced reflection coating 116, the second light ray will pass through the adhesive layer 114, and thus a propagation path of the second light ray will be affected by the wedge-shaped adhesive layer 114. The second secondary image is formed by reflection of the third light ray by the first surface M1. As such, in a process of being incident on the exposed surface of the enhanced reflection coating 116 and exiting from the exposed surface of the enhanced reflection coating 116, the third light ray will pass through the adhesive layer 114, and thus a propagation path of the third light ray will be affected by the wedge-shaped adhesive layer 114. In summary, if the angle at which the fifth surface M5 and the sixth surface M6 are inclined relative to each other is changed, the propagation path of the second light ray and the propagation path of the third light ray will be changed correspondingly, and the position of the first secondary image and the position of the second secondary image will further be changed. Therefore, in a design phase, the angle at which the fifth surface M5 and the sixth surface M6 are inclined relative to each other may be set according to the position of the second primary image, making the first secondary image and the second secondary image as close as possible to the second primary image. Therefore, compared with the related art where the adhesive layer 114 is of uniform thickness, the wedge-shaped adhesive layer 114 in the present disclosure enables the second light ray and the third light ray to deflect, such that the first secondary image and the second secondary image may get closer to the second primary image, respectively. It can be understood that, the closer the first secondary image and the second secondary image are to the second primary image, respectively, the more the first secondary image and the second secondary image overlap with the second primary image, respectively, and thus the influence of the first secondary image and the second secondary image on the vision of the driver is reduced, thereby improving the driving experience.

The following elaborates the materials, processes, sizes, and other information of each component in laminated glass 110.

An outer glass 111: the outer glass 111 has a first surface M1 facing towards an outside of a vehicle 1 and a second surface M2 facing towards an inside of the vehicle 1. The outer glass 111 can be formed by the bending process at a high temperature of at least 500°C. The thickness of the outer glass 111 may range from 1.6 mm to 5.0 mm, for example, 1.6 mm, 1.8 mm, 2.1 mm, 2.6 mm, 3.2 mm, 3.5 mm, 4.0 mm, 4.5 mm, 5.0 mm, etc., preferably 1.8 mm and 2.1. The outer glass 111 may be a transparent glass, an ordinary green glass, or a solar green glass, preferably the solar green glass having a light-absorbing function.

An adhesive layer 114: the adhesive layer 114, also referred to as a thermoplastic interlayer, is sandwiched between the outer glass 111 and an inner glass 115 to bond the second surface M2 and a third surface M3. The thermoplastic interlayer is configured to bond and fix the outer glass 111 and inner glass 115 together. For example, a material of the adhesive layer may be one or more selected from the group consisting of polycarbonate (PC), polyvinyl chloride (PVC), polyvinyl butyral (PVB), ethylene-vinyl acetate (EVA), polyacrylate (PA), polymethyl methacrylate (PMMA), polyurethane (PUR), ionic polymer (e.g., SentryGlas Plus (SGP)), etc. Certainly, the thermoplastic interlayer may also be implemented to have a localized coloring function. For example, at least one colored region may be disposed at the top of the laminated glass 110 to serve as a shadow strip, thereby reducing the interference of sunlight in the human eye. For another example, a colored region may be disposed at the bottom of the laminated glass 110 to provide a shading effect. Alternatively, the thermoplastic interlayer may be composed of two or three layers of thermoplastic polymer film, where the top of the laminated glass 110 or the bottom of the laminated glass 110 is colored, and the central visible region remains transparent. The thermoplastic interlayer may also be formulated with an infrared absorber to provide heat and light absorption properties. The thermoplastic interlayer may also include at least two layers, with one layer having a higher plasticizer content to provide sound insulation. Preferably, a thermoplastic polymer film with both infrared absorption and a wedge angle is selected.

The inner glass 115: the inner glass 115 has the third surface M3 facing towards the outside of the vehicle 1 and a fourth surface M4 facing towards the inside of the vehicle 1. The inner glass 111 can be formed by the bending process at a high temperature of at least 500°C. The thickness of the inner glass 115 typically ranges from 0.7mm to 5.0mm, for example, 0.7mm, 1.1mm, 1.6mm, 1.8mm, 2.1mm, 2.6mm, 3.2mm, 3.5mm, 4.0mm, 4.5mm, 5.0mm, etc., preferably 1.8mm and 2.1mm. The inner glass 1 may be a transparent glass, an ordinary green glass, or a solar green glass, preferably the solar green glass.

A light-shielding layer 112: the light-shielding layer 112, also referred to as a shielding layer, can be formed by applying ceramic ink or ultraviolet ink to the second surface M2 and/or the fourth surface M4. The light-shielding layer 112 is used to improve appearance, shield interior components, and enhance local adhesion. Alternatively, a thermoplastic interlayer with a coloring function may be used as the light-shielding layer 112. A visible light transmittance of the light-shielding layer 112 is less than or equal to 5.0%, preferably less than or equal to 1.5%.

An enhanced reflection coating 116, the enhanced reflection coating 116, also referred to as a dielectric coating, can be directly deposited onto the fourth surface M4 through CVD or PVD, for example, a magnetron sputtering deposition. Preferably, the enhanced reflection coating 116 is able to withstand a high-temperature heat treatment, such as a thermal treatment with a bending process like heat bending or tempering. Specifically, the enhanced reflection coating 116 may include highly reflective non-metallic materials such as silicon oxide and nitrogen oxide, and thus the enhanced reflection coating 116 has a particularly high reflectivity for P-polarized light. The enhanced reflection coating 116 does not contain soft metals that are prone to chemical reactions, such as silver, etc., and thus the enhanced reflection coating 116 has good abrasion resistance and corrosion resistance. As such, the enhanced reflection coating 116 can be exposed to air and serve as an inner surface of the laminated glass 110, directly receiving a projection light ray and achieving a good reflective effect.

A first bus-bar 117 and a second bus-bar 118: the first bus-bar 117 and the second bus-bar 118 are positioned between the outer glass 111 and the inner glass 115. The first bus-bar 117 and the second bus-bar 118 are connected to a heating element 113, respectively. A heating current from a power supply can flow through the heating element 113 via the first bus-bar 117 and the second bus-bar 118 to. The heating element 113 generates heat under the action of the heating current, thereby enabling the window glass to have functions such as defrosting, defogging, and de-icing. A distance from the first bus-bar 117 or the second bus-bar 118 to an edge of a light-transmitting layer 100 can range from 6 mm to 30 mm. A material of the first bus-bar 117 and a material of the second bus-bar 118 may be a metal foil, conductive silver paste, etc.

Although embodiments of the present disclosure have been illustrated and described above, it can be understood that, the above embodiments are exemplary and cannot be understood as limitations on the present disclosure. Those skilled in the art can make changes, modifications, replacements, and variations for the above embodiments within the scope of the present disclosure, and these improvements and modifications are also considered to fall within the protection scope of the present disclosure.

## Claims

1. A laminated glass, comprising:
an outer glass and an inner glass that are stacked, wherein the outer glass has a first surface away from the inner glass and a second surface closer to the inner glass, and the inner glass has a third surface closer to the outer glass and a fourth surface away from the outer glass;
an adhesive layer disposed between the outer glass and the inner glass, to bond the outer glass and the inner glass together;
a light-shielding layer disposed along an edge of the laminated glass, to form a light-transmitting region and a light-blocking region in the laminated glass, wherein the light-blocking region has at least one first display region, and the at least one first display region is configured for reflecting a projection light ray emitted by a projection assembly to form a first primary image; and
a heating element disposed between the outer glass and the inner glass, wherein the heating element is configured for generating heat when the heating element is energized.

2. The laminated glass of claim 1, wherein the light-shielding layer comprises a first light-shielding layer, the first light-shielding layer is disposed on the second surface, and the heating element is disposed between the adhesive layer and the second surface or between the adhesive layer and the third surface.

3. The laminated glass of claim 2, wherein the laminated glass further comprises an enhanced reflection coating, the enhanced reflection coating is disposed on the fourth surface, the enhanced reflection coating at least partially covers the at least one first display region, and the enhanced reflection coating is configured to increase a reflectivity of the at least one first display region for P-polarized light.

4. The laminated glass of any one of claims 1 to 3, wherein the light-transmitting region has at least one second display region, and the at least one second display region is configured for reflecting the projection light ray emitted by the projection assembly to form a second primary image.

5. The laminated glass of claim 4, wherein the laminated glass further comprises an enhanced reflection coating, the enhanced reflection coating at least partially covers the at least one second display region, and the enhanced reflection coating is configured to increase a reflectivity of the at least one second display region for P-polarized light.

6. The laminated glass of any one of claims 1 to 3, wherein the light-shielding layer comprises a second light-shielding layer, the second light-shielding layer is disposed on the third surface or the fourth surface, the second light-shielding layer at least covers the at least one first display region, and the heating element is disposed between the second light-shielding layer and the second surface.

7. The laminated glass of claim 6, wherein the light-transmitting region has at least one second display region, and the at least one second display region is configured for reflecting the projection light ray emitted by the projection assembly to form a second primary image; and the laminated glass further comprises an enhanced reflection coating, the enhanced reflection coating is disposed on the fourth surface, the enhanced reflection coating at least partially covers the at least one second display region, and the enhanced reflection coating is configured to increase a reflectivity of the at least one second display region for P-polarized light.

8. The laminated glass of claim 3, 5, or 7, wherein a reflectivity of the at least one first display region for the P-polarized light is greater than or equal to 10%; and/or the light-transmitting region has at least one second display region, and a reflectivity of the at least one second display region for the P-polarized light is greater than or equal to 10%.

9. The laminated glass of claim 1, wherein the heating element is a transparent conducting coating, and the transparent conducting coating comprises at least one of a metal layer, a metal-alloy layer, and a metal-oxide layer, wherein a material of the metal layer comprises one or more selected from the group consisting of gold (Au), silver (Ag), copper (Cu), aluminum (Al), and molybdenum (Mo), a material of the metal alloy layer comprises a metal alloy composed of silver and one or more selected from the group consisting of copper (Cu), gold (Au), palladium (Pd), tin (Sn), zinc (Zn), lead (Pb), and nickel (Ni), and a material of the metal oxide layer comprises one or more selected from the group consisting of indium tin oxide, fluorine-doped tin oxide, aluminum-doped tin oxide, gallium-doped tin oxide, boron-doped tin oxide, tin zinc oxide, and antimony-doped tin oxide.

10. The laminated glass of claim 1, wherein the heating element is an electric heating wire, wherein
the electric heating wire is an enameled wire, wherein an inner layer of the enameled wire is made of a conductive material, and an outer layer of the enameled wire is made of an insulating material; or
the electric heating wire is a tungsten wire; or
the electric heating wire is a copper wire.

11. The laminated glass of claim 1, wherein the laminated glass further comprises a first bus-bar and a second bus-bar that are disposed between the outer glass and the inner glass, the first bus-bar and the second bus-bar are disposed in the light-blocking region, the first bus-bar and the second bus-bar are spaced apart from each other and are electrically connected to the heating element, and the heating element is configured for generating heat when the first bus-bar and the second bus-bar are energized.

12. The laminated glass of claim 11, wherein a minimum distance from the first bus-bar or the second bus-bar to an edge of a light-transmitting layer ranges from 6 mm to 30 mm.

13. The laminated glass of claim 1, wherein the adhesive layer is a thermoplastic polymer film with a wedge angle ranging from 0.1 mrad to 1.0 mrad.

14. A head-up display (HUD) system, comprising a projection assembly and the laminated glass of any one of claims 1 to 13, wherein the projection assembly is configured to emit the projection light ray onto the laminated glass.

15. The HUD system of claim 14, wherein the projection light ray comprises P-polarized light and/or S-polarized light.

16. The HUD system of claim 14, wherein the projection assembly comprises a first projection assembly and a second projection assembly, the light-blocking region of the laminated glass has the at least one first display region, the light-transmitting region of the laminated glass has at least one second display region, the first projection assembly is configured to project a light ray onto the at least one first display region to form the first primary image, and the second projection assembly is configured to project a light ray onto the at least one second display region to form a second primary image.

17. The HUD system of claim 14, wherein the projection light ray emitted by the projection assembly onto the laminated glass has an incident angle ranging from 40° to 80°.

18. The HUD system of claim 17, wherein the projection light ray emitted by the projection assembly onto the laminated glass has a horizontal field of view (HFOV) ranging from 0° to 50° in a horizontal direction.

19. The HUD system of claim 14, wherein a color difference δE*between an image formed by the projection light ray emitted by the projection assembly onto the laminated glass and the laminated glass satisfies δE*= ((δL*/2)² + (δa*)² + (δb*)²)^{0.5}, and δE*≥ 19.9, wherein δL*is a lightness difference between a color of the image formed by the projection light ray onto the laminated glass and a color of the laminated glass, δa* is a green-red chroma difference between the color of the image formed by the projection light ray onto the laminated glass and the color of the laminated glass, and δb*is a blue-yellow chroma difference between the color of the image formed by the projection light ray onto the laminated glass and the color of the laminated glass.

20. A vehicle, comprising a vehicle frame and the head-up display (HUD) system of any one of claims 14 to 19, wherein the HUD system is carried on the vehicle frame.
